(19) Europäisches Patentamt
European Patent Office
Office européen des brevets

(11) **EP 3 991 538 A1**

(12) **EUROPEAN PATENT APPLICATION**
published in accordance with Art. 153(4) EPC

(43) Date of publication:
**04.05.2022 Bulletin 2022/18**

(21) Application number: **20832346.9**

(22) Date of filing: **20.05.2020**

(51) International Patent Classification (IPC):
***A01D 41/127*** *(2006.01)*

(52) Cooperative Patent Classification (CPC):
**A01D 41/127**

(86) International application number:
**PCT/JP2020/019934**

(87) International publication number:
**WO 2020/261825 (30.12.2020 Gazette 2020/53)**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**KH MA MD TN**

(30) Priority: **26.06.2019 JP 2019119006
28.06.2019 JP 2019121787**

(71) Applicant: **Kubota Corporation
Osaka-shi, Osaka 5568601 (JP)**

(72) Inventors:
• **HORI Takanori**
**Sakai-shi, Osaka 5900823 (JP)**
• **SAITO Naoki**
**Sakai-shi, Osaka 5900823 (JP)**
• **SUGA Yuya**
**Sakai-shi, Osaka 5900823 (JP)**

(74) Representative: **Cabinet Beau de Loménie
158, rue de l'Université
75340 Paris Cedex 07 (FR)**

(54) **COMBINE**

(57) A combine including: a grain tank that stores grains sorted by a sort unit that swings to sort grains fallen from a threshing cylinder unit; a yield measuring device 50 that measures the amount of grain put in the grain tank; a unit yield calculation unit 81 that calculates a unit yield per unit plot in a cultivated field, using the amount of grain; an opening degree adjustment unit 1 that adjusts the opening degree of a chaff sheave of the sort unit in accordance with a threshing state of the threshing apparatus; a mode setting unit 73 that sets a yield accuracy priority mode in which priority is given to accuracy of the unit yield calculation performed by the unit yield calculation unit 81; and a yield accuracy maintenance unit 74 that in response to the mode setting unit 73 setting the yield accuracy priority mode, forcibly fixes the opening degree of the chaff sheave at a specific opening degree.

Fig.6

EP 3 991 538 A1

# EP 3 991 538 A1

**Description**

Technical Field

The present invention relates to a combine.

Background Art

1. Conventionally, there is a combine that can calculate a unit yield, which is a grain yield per unit plot in a cultivated field.

In advanced cultivated field management supported by computers, the yield distribution per unit plot in the cultivated field is important data. Therefore, a combine according to Patent Document 1 includes a yield measuring device, for example. Before the grains obtained by threshing reaped stalks reaped from the cultivated field while the combine is travelling are stored in a grain tank, the amount of grain is measured by a yield measuring device. Based on the amount of grain thus measured, a unit travel yield, which is the yield per unit mileage, is calculated, and yield map data is obtained from this unit travel yield and harvest travel positions (travel locus) calculated by a GPS unit. The yield measuring device is configured to measure the grain that has been conveyed from the threshing apparatus and has been input to the grain tank. Therefore, a yield, which is the amount of grain obtained in a unit plot at a harvest position (cultivated field position) calculated by the GPS unit, is assigned to the unit plot, considering the time delay between the time at which stalks are harvested and the time at which yield is measured.

In a combine, such a time delay is not necessarily constant. That is, in threshing processing performed by a combine, as shown in Patent Document 2, for example, the opening degree of a chaff sheave is adjusted and the volume of sorting air blown from a fanning mill is adjusted through grain sort control for preventing straw from being mixed in with the grains to be stored in the grain tank, as much as possible. Grain sort performance is improved by adjusting the opening degree of the chaff sheave and the wind power of the fanning mill based on a threshing condition. However, if the processing amount of the second product to be threshed is increased as a result, the delay time between the time at which stalks are harvested and the time at which yield is measured changes, and an error will occur in the assignment of yield at the harvest position.

2. Conventionally, there is a combine that can calculate a unit yield, which is a grain yield per small plot in a cultivated field.

A combine according to Patent Document 3 includes a yield measuring unit that measures the flow rate of grains obtained through threshing, flowing into a grain tank, and a machine body position measuring means for measuring the position of the machine body in a cultivated field. The yield measured by the yield measuring unit indicates the yield at a time that is early than the time of this yield measurement (the time at which the yield is measured by the yield measuring unit) by a predetermined time (delay time). This delay time is the total of threshing processing time, conveyance time that is taken to convey grains to the yield measuring unit, and so on. Considering such a situation, the yield measured by the yield measuring unit is corrected to be the yield in the cultivated field's small plot in which the machine body was located at the time that is earlier than the time of the yield measurement by the delay time. The yield increases from zero at the start of reaping of stalks, and therefore it is difficult to stabilize the yield. However, the combine according to Patent Document 3 does not take such a situation into consideration. If the reaping start area is located at the position of the machine body as of the time that is earlier than the time of the yield measurement by the delay time, the yield assigned to the small plot will include an error, and an accurate yield distribution for the entire cultivated field cannot be obtained.

In order to solve the problem in Patent Document 3, the combine according to Patent Document 4 includes a unit yield correction unit that corrects the unit yield at the start of reaping upon detection of the start of reaping of planted stalks by a reaping part. This unit yield correction unit replaces the unit yield corresponding to the small plot at the start of reaping of planted stalks with the unit yield measured in the next small plot. As a result, the measured yield value corresponding to the start of reaping may deviate from the actual value.

Prior Art Documents

Patent Documents

Patent Document 1: WO 2016/147521
Patent Document 2: JP 2003-284424A
Patent Document 3: JP 2005-278539A

2

Patent Document 4: JP 2017-060443A

Summary of the Invention

Problems to be Solved by the Invention

1. A problem corresponding to Background Art 1 is as follows.
An object of the present invention is to provide a combine capable of calculating the yield per unit plot in a cultivated field as accurately as possible regardless of the state of threshing.
2. A problem corresponding to Background Art 2 is as follows.
In the combine according to Patent Document 4, the yield assigned to a small plot at the start of reaping is replaced with the yield assigned to the next small plot, and therefore, in order to obtain an accurate yield distribution in the entire cultivated field, it is a prerequisite that the yields of the small plots continuous from the reaping start position are substantially the same. Also, if the small plot length is short, the yield assigned to the next small plot at the start of reaping may include the same error as the first small plot at the start of reaping.

For this reason, there is demand for a combine that employs a yield correction technique that makes the yield assigned to the small plot at the start of reaping more accurate.

Means for Solving Problems

1. The following is a means for solving the problem corresponding to Problem 1.

A combine according to the present invention includes: a reaping unit that reaps planted stalks; a threshing apparatus including a threshing cylinder unit that processes reaped stalks and a sort unit that swings to sort grains falling from the threshing cylinder unit; a grain tank that stores grains sorted by the sort unit; a yield measuring device that measures an amount of grain put in the grain tank; a unit yield calculation unit that calculates a unit yield per unit plot in a cultivated field based on the amount of grain; an opening degree adjustment unit that adjusts an opening degree of a chaff sheave of the sort unit in accordance with a threshing state of the threshing apparatus; a mode setting unit that sets a yield accuracy priority mode in which priority is given to accuracy of the unit yield calculation performed by the unit yield calculation unit; and a yield accuracy maintenance unit that in response to the mode setting unit setting the yield accuracy priority mode, forcibly fixes the opening degree of the chaff sheave at a specific opening degree in preference to the opening degree as adjusted by the opening degree adjustment unit.

Also, regarding a yield calculation method for calculating the yield of a combine according to the invention, the combine includes a reaping unit that reaps planted stalks; a threshing apparatus including a threshing cylinder unit that processes reaped stalks and a sort unit that swings to sort grains fallen from the threshing cylinder unit; a grain tank that stores grains sorted by the sort unit; and a yield measuring device that measures an amount of grain put in the grain tank, the yield calculation method including: calculating a unit yield per unit plot in a cultivated field, using the amount of grain; adjusting an opening degree of a chaff sheave of the sort unit in accordance with a threshing state of the threshing apparatus; setting a yield accuracy priority mode in which priority is given to accuracy of the unit yield calculation performed in the unit yield calculation step; and in response to the yield accuracy priority mode being set in the mode setting step, forcibly fixing the opening degree of the chaff sheave at a specific opening degree in preference to the opening degree as adjusted in the opening degree adjustment step.

With this configuration, when the yield accuracy priority mode is set, the opening degree of the chaff sheave of the sort unit is fixed at the specific opening degree, and thus the amount of the second product that varies depending on the opening degree of the chaff sheave becomes substantially constant or decreases to a negligible degree. As a result, variation of transit time (variation of delay time) from the time of harvest to the time of yield measurement, which is caused by variation in the ratio between the amount of grain sent to the grain tank as the first product and the amount of grain sent to the grain tank as the second product in the threshing apparatus, is substantially eliminated. As a result, the unit yield calculated by the unit yield calculation unit is accurately assigned to the harvest plot (reaping plot).

The opening degree of the chaff sheave is set based on the growth state of the stalks to be harvested for each cultivated field, and therefore it is preferable that the specific opening degree used in the yield accuracy priority mode is also set at least for each cultivated field. Therefore, in one preferable embodiment of the present invention, the specific opening degree is selectable.

In addition to adjusting the opening degree of the chaff sheave, for example, the wind power of the sorting wind produced by the fanning mill is also changed in order to optimize the threshing performance in the combine. If the ratio between the amount of the first product and the amount of the second product varies due to frequent changes in the wind power of the sorting wind, the transit time of the grains from the time of harvest to the time of yield measurement also varies, and the assignment of yields to harvest plots may be inaccurate. This problem is solved by keeping the wind power of the sorting wind constant. Therefore, a preferable embodiment of the present invention includes a wind power changing unit that changes the wind power of a fanning mill that supplies sorting wind to the sort unit, and in response to the mode setting unit setting the yield accuracy priority mode, the yield accuracy maintenance unit forcibly fixes the wind power of the fanning mill at a specific wind power in preference to the wind power adjusted by the wind power adjustment unit. Furthermore, if a configuration in which the specific wind power is selectable is employed, the sorting wind power can be fixed at a value that is suitable for the growing state of the planted stalks for each cultivated field.

When the reaping unit is in the non-reap work state, the reaped stalks are not supplied to the threshing apparatus except immediately after the transition from the reap work state to the non-reap work state. Therefore, there is no need to fix the threshing control parameters (the opening degree of chaff sheave and the rotation speed of the fanning mill) in the yield accuracy priority mode. Therefore, in one preferable embodiment of the present invention, the mode setting unit has a function of determining whether the reaping unit is in a reap work state or a non-reap work state, and sets the yield accuracy priority mode when the reaping unit is in the reap work state, and cancels the yield accuracy priority mode when the reaping unit is in the non-reap work state.

One preferable method for determining the reap work state or the non-reap work state of the reaping unit is to use a signal from a stalk detection sensor that detects the presence of reaped stalks. The stalk detection sensor can be formed using a contact type sensor such as a limit switch or a non-contact type sensor that employs light or ultrasonic waves. One preferable embodiment of the present invention includes a stalk detection sensor that detects presence or absence of the reaped stalks in the reaping unit or the threshing apparatus, wherein in response to the stalk detection sensor detecting the absence, the mode setting unit determines that the reaping unit is in the non-reap work state.

Even if the grain detection sensor detects a transition from the presence of reaped stalks to the absence of reaped stalks, i.e., the transition from the reap work state to the non-reap work state of the reaping unit, grains and stalks still remain in the sorting area of the threshing apparatus immediately after the transition. Considering such temporary retention, one preferable embodiment of the present invention includes a stalk detection sensor that detects presence or absence of the reaped stalks in the reaping unit or the threshing apparatus, wherein, after the stalk detection sensor detects the absence, the mode setting unit determines upon a predetermined period of time elapsing that the reaping unit is in the non-reap work state. Alternatively, in response to the stalk detection sensor detecting the absence, the mode setting unit determines upon a certain distance being travelled that the reaping unit is in the non-reap work state.

A combine that can travel automatically, which has begun to spread in recent years, can calculate the self-position thereof, using satellite radio waves, or the like. Furthermore, by using a cultivated field map and a travel locus, it is possible to detect that the reaping unit has entered a non-work area from a work area. Therefore, one preferable embodiment of the present invention includes a self-position calculation unit that detects entrance of the reaping unit from a work area into a non-work area in a reap work passage, wherein the mode setting unit determines upon the self-position calculation unit detecting the entrance of the reaping unit into the non-work area that the state is the non-reap work state.

A yield calculation program according to the present invention causes a computer to carry out the yield calculation method according to the present invention. A computer-readable recording medium according to the present invention is a computer-readable recording medium on which the yield calculation program according to the present invention is recorded.

2. The following is a means for solving the problem corresponding to Problem 2.

A combine according to the present invention includes: a reaping unit that reaps planted stalks from a cultivated field; a threshing unit that threshes stalks reaped by the reaping unit; a grain tank that stores grains threshed by the threshing unit; a yield measuring unit that measures, as a measured yield, an amount of grain sent from the threshing unit to the grain tank; a yield assigning unit that assigns, to a measurement point that is calculated with use of satellite positioning, the measured yield at the measurement point; a designation unit that designates, as a correction point, the measurement point that is located in a reaping start area and designates, as designated measurement points, a plurality of measurement points that are located around the correction point; and a yield correction unit that, based on the measured yields assigned to the designated measurement points, corrects the measured yield assigned to the correction point.

Regarding a yield correction method for correcting a yield of a combine according to the present invention, the combine includes: a reaping unit that reaps planted stalks from a cultivated field; a threshing unit that threshes stalks reaped by the reaping unit; a grain tank that stores grains threshed by the threshing unit; and a yield measuring unit that measures, as a measured amount, an amount of grain sent from the threshing unit to the grain tank, the yield correction method including: a yield assigning step of assigning, to a measurement point that is calculated with use of satellite positioning, the measured yield at the measurement point; a designation step of designating, as a correction point, the measurement point that is located in a reaping start area and designating, as designated measurement points a plurality of measurement points that are located around the correction point; and a yield correction step of correcting the measured yield assigned to the correction point, based on the measured yields assigned to the designated measurement points.

With this configuration, a measurement point that is located in the reaping start area, of the measurement points to which the measured yields are sequentially assigned by the yield measuring unit, is the target (correction point) for which the measured yield is to be corrected. The new measured yield of the correction point is calculated based on the measured yields of the plurality of measurement points (designated measurement points) located around the correction point. By using the value derived from the measured yields assigned to the plurality of measurement points distributed around the correction point as the new measured yield of the correction point, an error is prevented from occurring in yield measurement at the start of reaping. In particular, the measured yields of a plurality of measurement points are used for correction, and therefore, even if there is an error in the yield measurement of the measured yields of adjacent measurement points, the influence of the error can be suppressed.

In general work travel of a combine, first, the combine performs turn reaping to reap planted stalks in an outer peripheral area of the cultivated field. The reaped area created through this travel is called a turning area (headland). Planted stalks in an unreaped area that exists inside the reaped area are reaped through reciprocating straight travel (or travel similar to straight travel), using the turning area as an area in which the combine makes a turn (U-turn, $\alpha$-turn). The travel state of the combine immediately after finishing reaping in the unreaped area (unworked area) from this turning area and entering the turning area is referred to as the "start of reaping", and the travel state of the combine immediately after entering the turning area from this unreaped area is referred to as the "end of reaping".

The growth state of the planted stalks depends on the growth position in the cultivated field, and therefore, if the yield at a point that is excessively far from the point to be corrected is referred to, a large deviation may occur. For this reason, in one preferable embodiment of the present invention, the designation unit selects, as the designated measurement points, measurement points that are located within a predetermined distance from the correction point.

The greater the number of designated measurement points used to calculate the new measurement yield at the correction point is, the greater the computational load is. To avoid this problem regarding the computational load, in one preferable embodiment of the present invention, the designation unit selects, as the designated measurement points, a predetermined number of measurement points selected in ascending order of the distance from the correction point.

As described above, when the combine performs reciprocating straight travel in an area in the turning area after setting the turning area as an area in which the combine turns (U-turn, $\alpha$-turn), the reaping start area and the reaping end area are close to each other. The measured yield at the measurement point located in the reaping end area is affected by the delay in the conveyance from the reaping unit to the grain tank, and is not an accurate measured yield. For this reason, in one preferable embodiment of the present invention, the designation unit determines, as an invalid measurement point, a measurement point that is located in a reaping end area, and excludes the invalid measurement point from the designated measurement points.

The measured yield at the measurement point designated as the correction point is corrected by the yield correction unit. The corrected measured yield does not necessarily indicate an actual value. Therefore, it is preferable that such a measured yield is not used to correct the measured yields at other measurement points. For this reason, in one preferable embodiment of the present invention, the designation unit determines, as an invalid measurement point, a measurement point to which the measured yield corrected by the yield correction unit is assigned, and excludes the invalid measurement point from the designated measurement points.

When calculating the measured yield at the correction point based on the measured yields of a plurality of designated measurement points, it is preferable to use a statistical representative value regarding the measured yield at the designated measurement point. In such a case, if there is little variation in the yields at the designated measurement points in the area where the designated measurement points are scattered, the arithmetic mean value can be used as the statistical representative value. However, the variation in yield in the cultivated field tends to increase depending on the distance from the correction point. Therefore, it is preferable to use a weighted average value using a weight determined based on the distance from the correction point, as a statistical representative value. For this reason, in one preferable embodiment of the present invention, the yield correction unit calculates, based on a weighted average of the measured yields assigned to the designated measurement points, the measured yield to be assigned to the correction point, the weighted average being such that a weight in the weighted average increases as the distance from the correction point increases.

In one preferable embodiment of the present invention, a small plot that is divided from the cultivated field includes at least one measurement point. As a result, it is possible to assign an accurate yield to each small plot.

In farm management, it is important to examine the variation in yield in the cultivated field and use it for the next farming operation. For this reason, one preferable embodiment of the present invention includes a yield map generation unit that generates a yield distribution map of the cultivated field based on the measured yields assigned to the measurement points.

A yield correction program according to the present invention causes a computer to carry out the yield correction method according to the present invention. A computer-readable recording medium according to the present invention is a computer-readable recording medium on which the yield correction program according to the present invention is recorded.

Brief Description of the Drawings

FIG. 1 is a diagram showing a first embodiment (the same applies up to FIG. 7), and is a side view showing the entirety of a combine.
FIG. 2 is a plan view showing the entirety of the combine.
FIG. 3 is a longitudinal side view showing a threshing apparatus.
FIG. 4 is a cross-sectional view showing a yield measuring device and a grain quality measuring device that are provided in a grain tank.
FIG. 5 is a plan view showing the yield measuring device.
FIG. 6 is a functional block diagram illustrating a control function for obtaining a yield map of a cultivated field.
FIG. 7 is a schematic diagram illustrating a process in which reaped stalks are subjected to threshing as the first or second product and sent to the grain tank.
FIG. 8 is a diagram showing a second embodiment (the same applies up to FIG. 12), and is a side view showing the entirety of a combine.
FIG. 9 is a plan view showing the entirety of the combine.
FIG. 10 is a schematic diagram showing a yield measuring unit and a taste value measuring unit that are provided in a grain tank.
FIG. 11 is a functional block diagram illustrating a control function for obtaining a yield map of a cultivated field.
FIG. 12 is an illustration diagram for illustrating correction processing that is performed to correct the measured yield at a measurement point in a reaping start area.

Description of Embodiments

First Embodiment

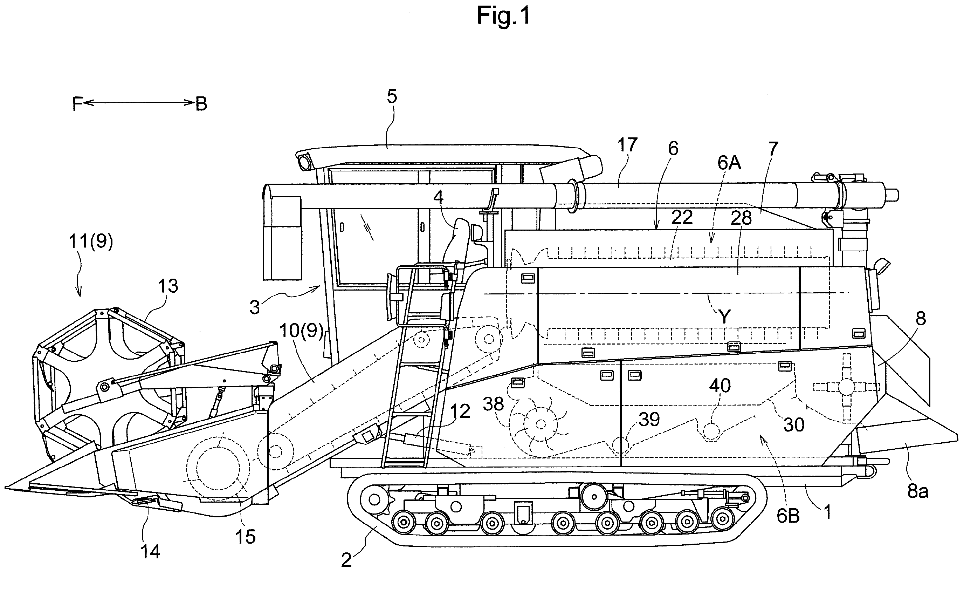

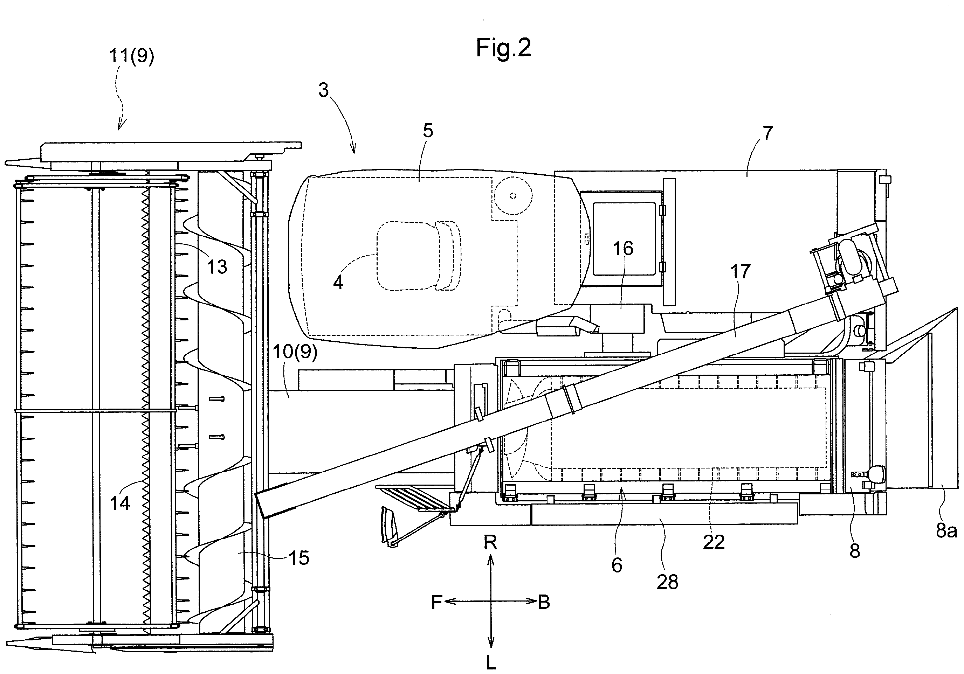

The following describes a first embodiment with reference to FIGS. 1 to 7.
Hereinafter, a normal type combine is taken as an example of a combine according to the present invention, and is illustrated based on the drawings. FIG. 1 is a left side view showing the entirety of the combine. FIG. 2 is a plan view showing the entirety of the combine. The direction indicated by F in FIGS. 1 and 2 is defined as a forward direction of the travel machine body 1, the direction indicated by B is defined as a rearward direction of the travel machine body 1, the direction indicated by L in FIG. 2 is defined as a direction to the left of the travel machine body 1, and the direction indicated by R in FIG. 2 is defined as a direction to the right of the travel machine body 1.
As shown in FIGS. 1 and 2, the combine includes a travel machine body 1 that is provided with a pair of left and right crawler travel apparatuses 2. A driver section 3 is formed in a right side portion of a front portion of the travel machine body 1. A driver's seat 4 is formed in the driver section 3. The driver section 3 is covered by a cabin 5. An engine (not shown) is provided below the driver's seat 4. A threshing apparatus 6 and a grain tank 7 are provided in a rear portion of the travel machine body 1. The threshing apparatus 6 and the grain tank 7 are arranged in a width direction of the travel machine body 1 such that the grain tank 7 is located rearward of the driver section 3. A discharged straw shredding apparatus 8 is provided rearward of the threshing apparatus 6. A reaping conveyance apparatus 9 extends forward from a threshing apparatus-side portion of the front portion of the travel machine body 1. The reaping conveyance apparatus 9 includes a conveyance unit 10 that extends forward from the travel machine body 1 so as to be able to be operated to swing upward and downward, and a reaping unit 11 that is provided on the front side of the travel machine body 1 and whose rear portion thereof is coupled to a front end portion of the conveyance unit 10. The reaping unit 11 is operated so as to be in a lowered working state and a raised non-working state in response to the conveyance unit 10 being operated to swing due to the extension and contraction of a lifting/lowering cylinder 12.
In the combine, harvesting work is performed to harvest rice, wheat, soybeans, etc. by causing the travel machine body 1 to travel in a state where the reaping unit 11 has been lowered to be in the lowered working state. In the reaping unit 11, ear tip-side portions of the planted stalks located forward of the travel machine 1 of the planted stalks in the cultivated field are shoveled rearward by a rotary reel 13, and root-side portions of the planted stalks are cut by the reaping apparatus 14, thus the planted stalks are reaped, and the entire reaped stalks from the roots to the ear tips are conveyed to the conveyance unit 10 by an auger 15. The reaped stalks conveyed to the conveyance unit 10 are conveyed rearward and supplied to the threshing apparatus 6 by the conveyance unit 10. In the threshing apparatus 6, the reaped stalks thus supplied are subjected to threshing processing, and sort processing is performed to distinguish the grains obtained through threshing processing, from dust and stalk pieces. The discharged threshed straw is subjected to shredding processing by the discharged straw shredding apparatus 8. Pieces of shredded straw are guided by a discharge port cover 8a and discharged rearward of the travel machine body 1. The threshed grains subjected to sort processing are conveyed by a winnowing apparatus 16 to the grain tank 7, and are stored in the grain tank 7. The threshed grains stored in the grain tank 7 can be taken out of the grain tank 7 using a threshed product discharge apparatus 17.

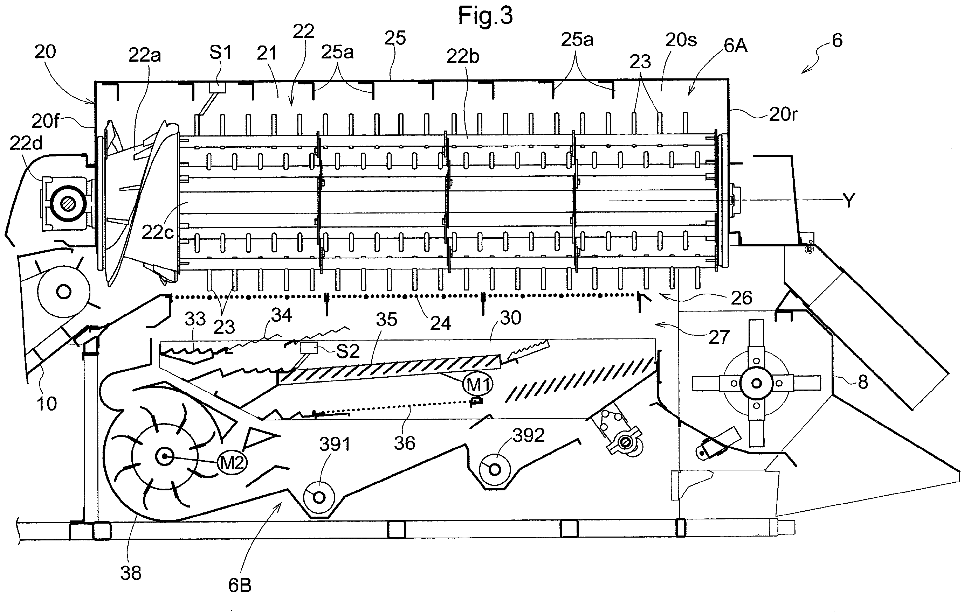

As shown in FIG. 3, the threshing apparatus 6 includes a threshing machine body 20. A threshing cylinder unit 6A is provided in an upper portion of the threshing machine body 20, and a sort unit 6B is provided in a lower portion of the threshing machine body 20.

As shown in FIG. 3, the threshing cylinder unit 6A includes a threshing chamber 21, a threshing cylinder 22 that is provided in the threshing chamber 21, and a receiving net 24 that is provided below the threshing cylinder 22. The threshing chamber 21 is formed by left and right side walls 20s of the threshing machine body 20, a front wall 20f, a rear wall 20r, a top plate 25, and the receiving net 24. The threshing cylinder 22 is supported by the front wall 20f and the rear wall 20r with a rotation support shaft 22c interposed therebetween, and is driven by a threshing cylinder drive unit 22d so as to rotate about the axis that extends in the front-rear direction of the threshing apparatus of the rotation shaft 22c, which is defined as a rotation axis Y. The threshing cylinder 22 includes a shoveling portion 22a that is provided in a front portion thereof and a threshing processing portion 22b that is provided on the rear side of the shoveling portion 22a. A plurality of dust feed valves 25a that are arranged in the front-rear direction of the threshing chamber 21 are supported on the inner surface side of the top plate 25. The left side of the threshing chamber 21 is covered with a threshing cover 28 (see FIGS. 1 and 2).

As shown in FIG. 3, in the threshing cylinder unit 6A, the reaped stalks supplied by the conveyance unit 10 to the front end portion of the threshing chamber 21 are shoveled by the shoveling portion 22a toward the rear side of the threshing cylinder 22, and are supplied to the threshing processing portion 22b. The reaped stalks supplied to the threshing processing portion 22b are subjected to threshing processing that is performed by threshing teeth 23 and the receiving net 24, as a threshing product. The threshing product to which a rotational force is applied by the threshing processing portion 22b comes into contact with the dust feed valves 25a, is guided by the dust feed valves 25a so as to flow toward the rear side of the threshing chamber 21, and is subjected to threshing processing while being transported toward the rear side of the threshing chamber 21. The grains obtained through threshing processing fall to the sort unit 6B through processed product leak holes in the receiving net 24. Straw dust, which is threshing dust generated as a result of threshing processing, is discharged from a dust discharge port 26 that is located in a rear portion of the threshing chamber 21, toward the rear side of the threshing chamber 21. The straw dust discharged from the threshing chamber 21 flows into the discharged straw shredding apparatus 8 from a discharge port 27 that is located in a rear portion of the threshing machine body 20.

As shown in FIG. 3, in the sort unit 6B, the threshed product leaked from the receiving net 24 is shaken by a grain pan 33, a sieve wire portion 34, a chaff sheave 35, and a grain sheave 36 of a swing sort apparatus 30, and is subjected to sorting wind from a fanning mill 38, and is thus subjected to sort processing through which grains and dust such as straw dust are distinguished from each other, while being transported rearward. The refined grains (grains) obtained as a first processed product through sort processing fall to a first product collecting unit 391 and are collected, and are discharged to the outside of the threshing machine body 20 by the first product collecting unit 391. The discharged grains are passed to the winnowing apparatus 16 (see FIG. 2). The second processed product obtained through sort processing falls to a second product collection unit 392 and is collected, is discharged to the outside of the threshing machine body 20 by the second product collection unit 392, is passed to a reduction apparatus (not shown), and is returned to the front portion of the swing sort apparatus 30 by the reduction apparatus. The dust selected in the swing sort apparatus 30, such as straw dust, flows into the discharged straw shredding apparatus 8 from the discharge port 27.

Although FIG. 3 only shows a schematic diagram, a stalk detection sensor S1 that detects the presence/absence of reaped stalks in the threshing apparatus 6 is provided. This stalk detection sensor S1 has a swing lever that extends downward from the top plate 25 of the threshing chamber 21. The swing lever swings as a result of coming into contact with reaped stalks that enter the gap between the threshing cylinder 22 and the top plate 25. The presence of reaped stalks is detected by detecting this swing displacement. When the swing lever is not in contact with reaped stalks, the swing lever is returned to the home position thereof by a spring. The absence of reaped stalks is detected by detecting the returning of the swing lever. Furthermore, a processing amount detection sensor S2 that detects the amount of threshing product that has fallen to the chaff sheave 35 in a threshed state is provided above the chaff sheave 35.

Although FIG. 3 only shows a schematic diagram, the opening degree of the chaff sheave 35 can be adjusted using a chaff motor M1. Furthermore, the wind power of the fanning mill 38 can be changed using a fanning mill motor M2. The wind power of the fanning mill 38 can be changed by adjusting the rotation speed of the fanning mill 38 or adjusting the opening degree of the blower port. The chaff motor M1 and the fanning mill motor M2 are controlled based on the detection result of the processing amount detection sensor S2 (a threshed state). For example, if the processing amount detection sensor S2 detects that the amount of threshing product is large, the opening degree of the chaff sheave 35 and the wind power of the fanning mill 38 are controlled to increase. If the processing amount detection sensor S2 detects that the amount of threshing product is small, the opening degree of the chaff sheave 35 and the wind power of the fanning mill 38 are controlled to decrease.

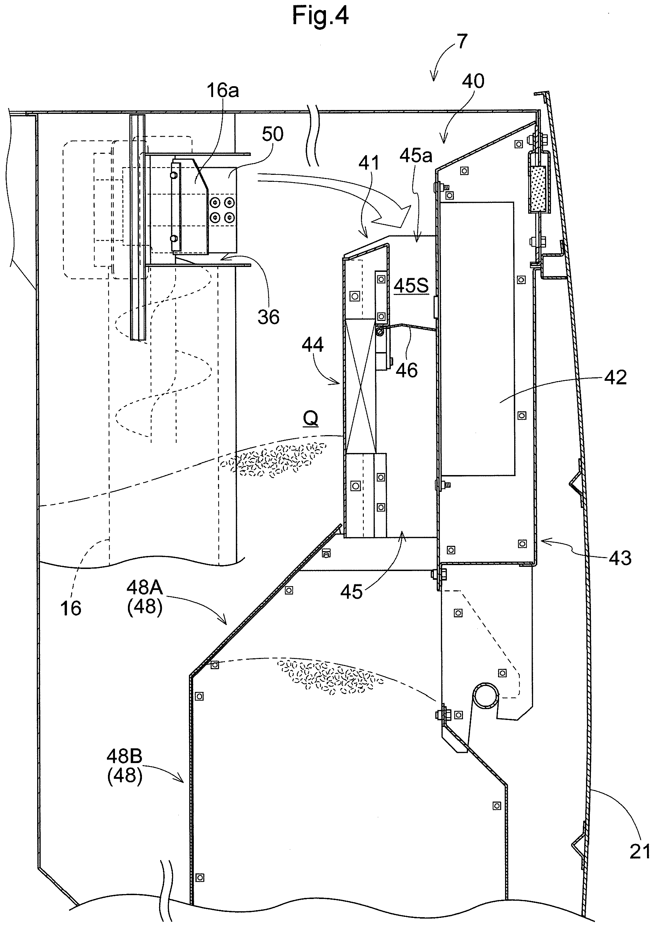

As shown in FIGS. 3 and 4, a yield measuring device 50 that measures a yield amount, which is the amount of grain input to the grain tank 7 from the threshing apparatus 6 via the first product collecting unit 391 and the winnowing apparatus 16 (see FIG. 2), is provided at an upper position in the grain tank 7. Furthermore, in this embodiment, a grain quality measuring device 40 that measures the quality (moisture, protein content, etc.) of grain is provided at a position where the grain quality measuring device 40 faces the yield measuring device 50.

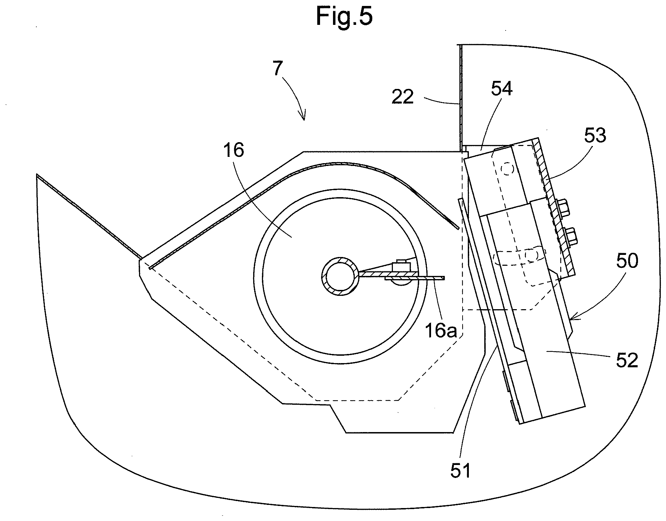

As shown in FIG. 5, the yield measuring device 50 includes a flat detection plate 51, a load cell 52, a support bracket 53 that supports the detection plate 51 and the load cell 52, and an attachment bracket 54 for attaching the yield measuring device 50 to the inner wall of the grain tank 7. The load cell 52 extends from a connection point of the load cell 52 and the support bracket 53, which serves as a base end, and is supported in a cantilever-like manner. With this configuration, when a load acts on the detection plate 51, the distortion of the load cell 52 increases. Grains are input to a storage space Q by a feeding blade 16a that is provided at the upper end of the winnowing apparatus 16. At this time, a certain percentage of the grains flung by the feeding blade 16a collide with the detection plate 51. The load cell 52 is distorted by the collision force (pressing force) of the grains bounced against the detection plate 51, and an electric signal is generated. This electric signal is used as a detection signal for calculating the flow rate of grains. The electric signal indicates a voltage value or a current value, for example. As the input amount of grain sent from the winnowing apparatus 16 increases, the pressing force of the grains on the detection plate 51 increases proportionally, and the detection signal of the load cell 52 also increases. Based on such a measurement principle, the yield measuring device 50 measures the amount of grain input to the grain tank 7.

The grain quality measuring device 40 includes a temporary storage unit 41 that temporarily stores the grains to be measured, and a measuring unit 42 that measures the quality of the grains stored in the temporary storage unit 41. The temporary storage unit 41 is located on the inner side of the grain tank 7, and the measuring unit 42 is located on the outer side of the grain tank 7. The measuring unit 42 is housed in a storage case 43 that is formed so as to be hermetically sealed. The temporary storage unit 41 includes a substantially square cylindrical storage case 44 that is integrally coupled to the inner side surface of the storage case 43, and grains can be stored in the storage case 44. A vertical passage 45 that penetrates through the storage case 44 in the vertical direction is formed in the storage case 44, and a shutter 46 is provided at an intermediate position of the vertical passage 45. The shutter 46 is configured to be repositionable to a closed position that closes the vertical passage 45 at the intermediate position thereof and an open position that opens the vertical passage 45 at the intermediate position thereof. A grain intake port 45a for intaking grains is formed at the upper end of the vertical passage 45. Some of the grains released by the feeding blade 16a of the winnowing apparatus 16 are taken into the intake port 45a. With the shutter 46 switched to the closed state, the grains are stored in a temporary storage space 45S created above the shutter 46 in the vertical passage 45. When the shutter 46 is switched to the open state, the stored grains fall. The measuring unit 42 irradiates the grains temporarily stored in the temporary storage space 45S with light, and measures the taste value (moisture and protein) of the grains as the grain quality based on the light returned through the grains, using a known spectroscopic analysis technique.

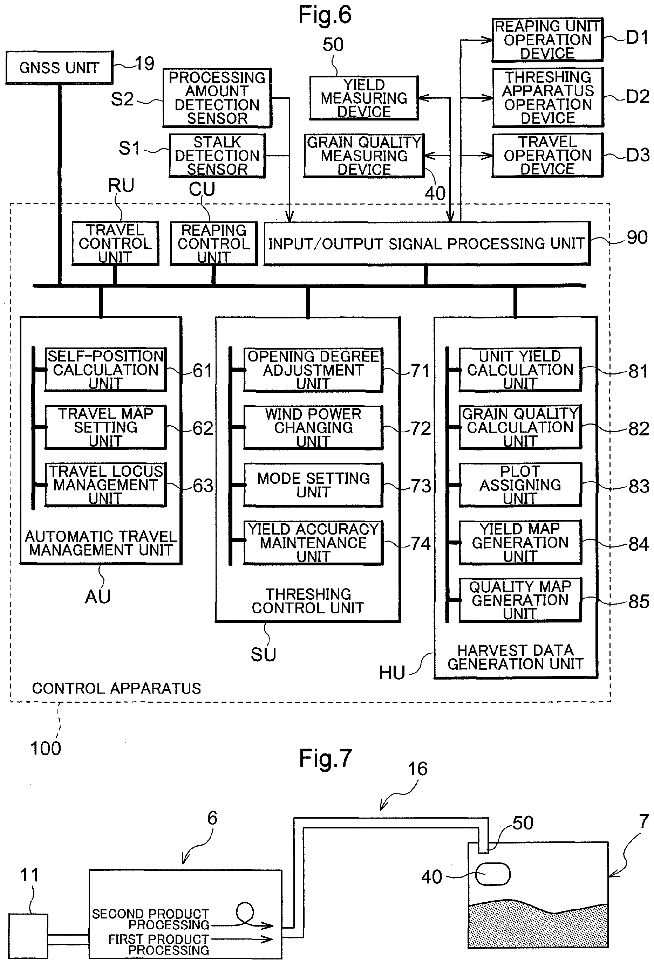

FIG. 6 shows a functional block diagram illustrating the control function for measuring the grain amount (yield) per unit plot (small plot) in the cultivated field to obtain the yield map (grain amount distribution map) of the cultivated field.

This combine can automatically travel along a preset travel route (travel map). For this reason, a GNSS unit 19 that receives satellite radio waves and calculates position coordinates is provided, and a control apparatus 100 is provided with an automatic travel management unit AU. The automatic travel management unit AU includes a self-position calculation unit 61, a travel map setting unit 62, a travel locus management unit 63, and so on. The self-position calculation unit 61 calculates the self-position in the cultivated field, more specifically, the reaping position (harvest position) of the planted stalks based on the position coordinates output from the GNSS unit 19. The travel map setting unit 62 sets a target travel route when automatic travel is being performed. The travel locus management unit 63 generates a travel locus of the travel machine body 1 (see FIG. 1), and manages an unworked area, an existing worked area, and a turning area (an area used when shifting from a work route to the next work route, also called a headland) in the cultivated field. Reaping work is not performed in the turning area, and therefore the turning area can be regarded as a non-work area in principle. With this configuration, the self-position calculation unit 61 can output a signal or a flag indicating entrance into the non-work area when the reaping unit 11 enters a non-work area from a work area.

Furthermore, the control apparatus 100 includes a travel control unit RU, a reaping control unit CU, a threshing control unit SU, and a harvest data generating unit HU. The travel control unit RU generates a control signal related to travel control and transmits the control signal to a travel operation device D3 via an input/output signal processing unit 90 to control the travel of the travel machine body 1. The reaping control unit CU generates a control signal related to reaping control and transmits the control signal to a reaping unit operation device D1 via the input/output signal processing unit 90 to control the operation of the reaping unit 11. The processing amount detection sensor S2, the stalk detection sensor S1, the yield measuring device 50, and the grain quality measuring device 40 described above also transmit/receive signals and data to and from the control apparatus 100 via the input/output signal processing unit 90.

Furthermore, as shown in FIGS. 1 and 3, the threshing control unit SU shown in FIG. 6 generates a control signal related to threshing control and transmits the control signal to a threshing apparatus operation device D2 via the input/output signal processing unit 90 to control the threshing apparatus 6. The threshing apparatus operation device D2 includes the chaff motor M1 and the fanning mill motor M2 described above. The threshing control unit SU includes an opening degree adjustment unit 71, a wind power changing unit 72, a mode setting unit 73, and a yield accuracy maintenance unit 74. The opening degree adjustment unit 71 adjusts the opening degree of the chaff sheave 35 of the sort unit 6B according to the threshing state of the threshing apparatus 6. Specifically, the chaff motor M1 is controlled so that the opening of the chaff sheave 35 increases as the detection value of the processing amount detection sensor S2 that detects the amount of threshing product that has fallen to the chaff sheave 35 increases, to prevent the threshing product from being held in the chaff sheave 35. If the opening degree of the chaff sheave 35 is large, the amount of grain collected by the first product collecting unit 391 increases, and if the opening degree of the chaff sheave 35 is small, the amount of threshing product collected by the second product collecting unit 392 and to be re-threshed increases. The wind power changing unit 72 also changes the wind power of the fanning mill 38 according to the threshing state of the threshing apparatus 6. Specifically, the fanning mill motor M2 is controlled so that the wind power of the fanning mill 38 increases as the detection value of the processing amount detection sensor S2 increases, and the threshing product that has not been sufficiently threshed is sent to the second product collecting unit 392. That is to say, the amount of threshed product collected by the second product collection unit 392 increases as the wind power of the fanning mill 38 increases.

As schematically shown in FIG. 7, the threshing product collected by the second product collecting unit 392 (see FIG. 3) is re-threshed and re-sorted, and thereafter collected by the first product collection unit 391 (see FIG. 3) as re-threshing grains. Therefore, the retention time of such grains in the threshing apparatus 6 is longer than that of the grains directly collected by the first product collection unit 391. That is to say, the average conveyance time (delay time) taken for grains obtained as a result of threshing the reaped stalks reaped by the reaping unit 11 and sent to the threshing apparatus 6 to be sent from the threshing apparatus 6 to the grain tank 7 varies depending on the amount of the collected second product. This variation has a direct influence on the retention time (delay time) of the reaped stalks or grains from the reaping unit 11 to the grain tank 7, which is required when the yield measured by the yield measuring device 50 is assigned as the yield at the reaping position.

Upon an instruction being input from an operator or a preset condition being satisfied, the mode setting unit 73 sets a yield accuracy priority mode in which the calculation accuracy of the amount (yield) of the grains obtained from the reaped stalks reaped by the reaping unit 11 is improved by suppressing the amount of the second product collected by the second product collecting unit 392. When the yield accuracy priority mode is set by the mode setting unit 73, the yield accuracy maintenance unit 74 forcibly fixes the opening degree of the chaff sheave 35 at a specific opening degree. The specific opening degree may be the complete closure of the chaff sheave 35, and is smaller than the average opening degree in conventional threshing control. Opening degrees at a plurality of levels may be set in advance as the specific opening degree so that the operator can freely determine and select the specific opening degree to be used, based on the state of the crops or the like. Furthermore, when the yield accuracy priority mode is set by the mode setting unit 73, the yield accuracy maintenance unit 74 fixes the opening degree of the chaff sheave 35 at the specific opening degree, and sets the wind power of the fanning mill 38 at a predetermined specific wind power as well. Regarding the specific wind power as well, a plurality of levels may be prepared so that the operator can freely determine and select the specific wind power to be used, based on the state of the crops.

When the combine is in the non-reap work state, the planted stalks are substantially not reaped and no grain is obtained. Therefore, when the combine is in the non-reap work state, the yield accuracy priority mode need not be set. Therefore, the mode setting unit 73 has a function of determining whether the combine is in a reap work state or a non-reap work state, and is configured to set the yield accuracy priority mode when it is determined that the combine is in a reap work state, and to cancel the yield accuracy priority mode when it is determined that the combine is in a non-reap work state.

The conditions for the mode setting unit 73 to set the yield accuracy priority mode are listed below. At least one of these conditions is actually used as a condition for determining the non-reap work state.

(1) When the stalk detection sensor S1 that detects the presence or absence of stalks in the threshing apparatus 6 detects the absence of stalks, the mode setting unit 73 determines that the combine is in the non-reap work state.

(2) Once the stalk detection sensor S1 detects the absence of stalks, the mode setting unit 73 determines that the state is in a non-reap work state upon a predetermined period of time elapsing. Thus, it is possible to resolve the inconvenience that the yield accuracy priority mode is not applied in threshing processing of a small amount of reaped stalks that are retained immediately after the absence of stalks is detected.

(3) Substantially the same measure as in (2). Once the stalk detection sensor S1 detects the absence of stalks, the mode setting unit 73 determines the non-reap work state upon a certain distance being travelled.

(4) As described above, the self-position calculation unit 61 can output a signal or a flag indicating the entrance into the non-work area when the reaping unit 11 enters a non-work area from a work area. Using the output of the signal or flag as a trigger, the mode setting unit 73 determines that the combine is in the non-reap work state.

The harvest data generating unit HU includes a unit yield calculation unit 81, a grain quality calculation unit 82, a plot assigning unit 83, a yield map generation unit 84, and a quality map generation unit 85. The unit yield calculation unit 81 calculates the unit yield per unit plot of the cultivated field based on pieces of grain amount data sequentially sent from the yield measuring device 50. Here, as a unit section, a square or rectangular plot in which the reaping width of the reaping unit 11 or half to several times the reaping width is one side, and half to several times the reaping width is the other side is adopted as the unit plot. The amount of grain measured while the combine travels in this unit plot is calculated as a unit yield. The grain quality calculation unit 82 calculates the taste value of the grains acquired in this unit plot as a unit taste value.

The plot assigning unit 83 assigns the unit yield calculated by the unit yield calculation unit 81 to the unit plot which is the actual reaping plot, using the delay time which is the grain residence time from the cutting point to the yield measurement point. Similarly, the plot assigning unit 83 also assigns the unit taste value calculated by the grain quality calculation unit 82 to the unit plot, which is the actual reaping plot.

The yield map generation unit 84 creates a yield map showing the yield distribution in each unit plot, using the unit yield assigned to the unit plot, which is the actual reaping plot calculated by the unit yield calculation unit 81. The quality map generation unit 85 creates a grain quality map showing the taste value distribution in each unit plot, using the unit taste value assigned to the unit section, which is the actual cutting section.

In addition, a yield calculation method for calculating a yield of the combine includes: a unit yield calculation step of calculating a unit yield per unit plot in a cultivated field, using the amount of grain; an opening degree adjustment step of adjusting the opening degree of the chaff sheave of the sort unit 6B according to the threshing state of the threshing apparatus 6; a mode setting step of setting a yield accuracy priority mode in which priority is given to the accuracy of the unit yield calculation performed in the unit yield calculation step; and a yield accuracy maintenance step of, when the yield accuracy priority mode is set in the mode setting step, forcibly fixing the opening degree of the chaff sheave at a specific opening degree in preference to the opening degree adjusted in the opening degree adjustment step.

A yield calculation program according to the present embodiment causes a computer to carry out the yield calculation method according to the present embodiment. A computer-readable recording medium according to the present embodiment is a computer-readable recording medium on which the program that causes a computer to carry out the yield calculation method according to the present embodiment is recorded.

Other Embodiments Modified from First Embodiment

(1) In the above-described embodiment, the yield measuring device 50 is configured to obtain the grain amount based on a pressing force that is applied to the detection plate 51 by the grains fed by the feeding blade 16a. Instead, it is possible to employ a yield measuring device 50 that determines a grain amount per unit time or a grain amount per unit mileage based on the time when the grain amount reaches a predetermined volume, using a temporary storage unit 41 of the grain quality measuring device 40 shown in FIG. 4. Of course, instead of sharing the temporary storage unit 41 with the grain quality measuring device 40, it is possible to employ a configuration in which the yield measuring device 50 has its own temporary storage unit 41, and measures a grain amount per unit time or a grain amount per unit mileage. Also, a granular material flow measuring device may be installed on a grain transport path extending from the threshing apparatus 6 to the grain tank 7 to measure the grain amount per unit time or the grain amount per unit mileage.

(2) In the above-described embodiment, a normal type combine is used as a combine. However, a head-feeding type combine may be used instead. In a head-feeding combine, a swing lever type sensor that is provided in the reaping unit 11 and detects the entry of stalks is used as the stalk detection sensor S1.

In the above-described embodiment, when the mode setting unit 73 sets the yield accuracy priority mode, the second product is prevented from being generated, by fixing the chaff sheave 35 to a specific opening degree and fixing the wind power of the fanning mill 38 to a specific wind power. In another embodiment regarding the case in which the yield accuracy priority mode is set, it is possible to employ a configuration with which only one of the fixing of the opening degree of the chaff sheave 35 and the fixing of the wind power of the fanning mill 38 is performed. Alternatively, when the dust feed valves 25a are of a variable attitude type, fixing the dust feed valves 25a to a specific attitude may be added as another embodiment in the case where the yield accuracy priority mode is set.

(3) The present invention is applicable to a combine that can calculate the yield per unit area in a cultivated field.

Second Embodiment

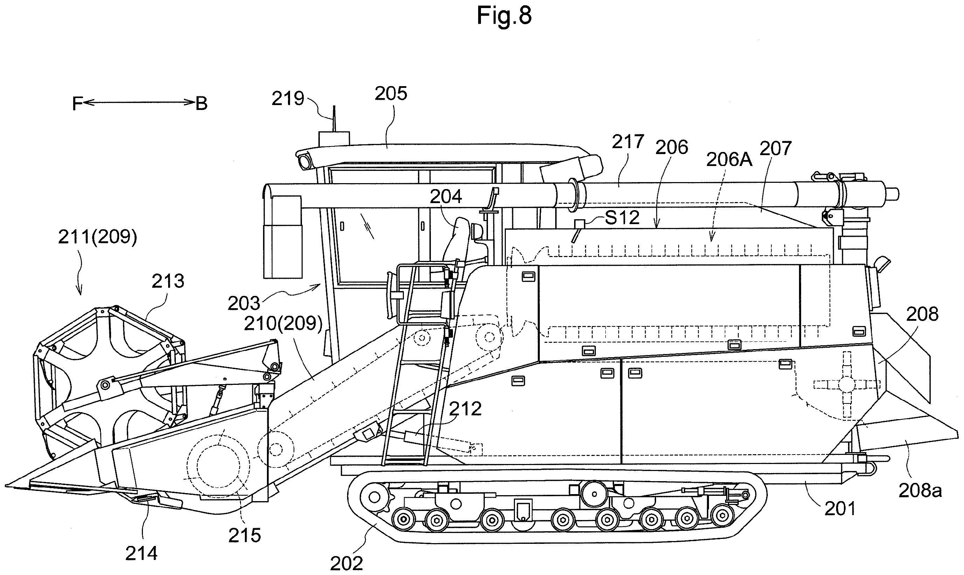

The following describes a second embodiment with reference to FIGS. 8 to 12.

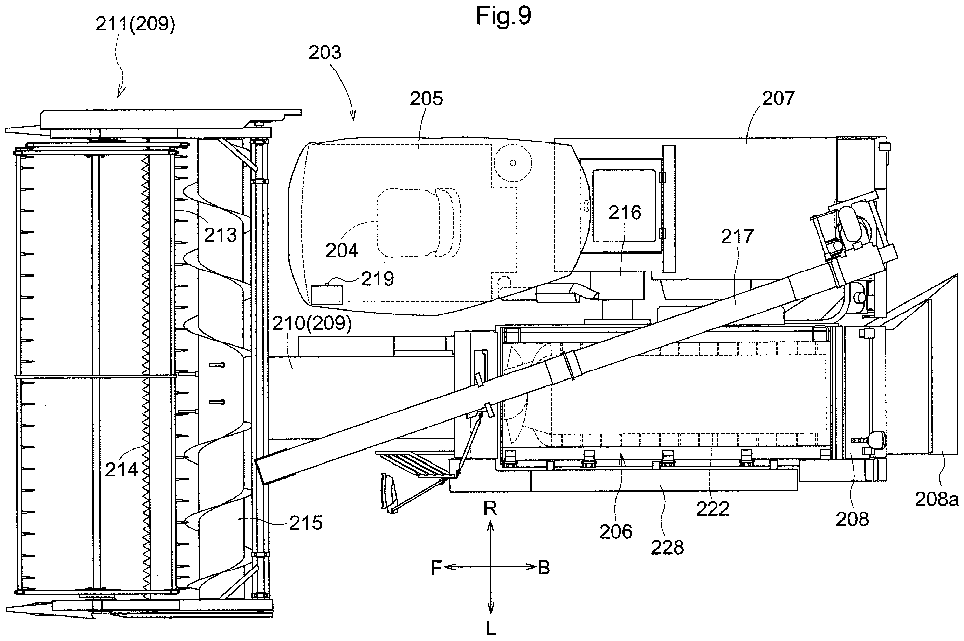

Hereinafter, a normal type combine is taken as an example of a combine according to the present invention, and is illustrated based on the drawings. FIG. 8 is a left side view showing the entirety of the combine. FIG. 9 is a plan view showing the entirety of the combine. The direction indicated by F in FIGS. 8 and 9 is defined as a forward direction of a travel machine body 201, the direction indicated by B is defined as a rearward direction of the travel machine body 201, the direction indicated by L in FIG. 9 is defined as a direction to the left of the travel machine body 201, and the direction indicated by R in FIG. 9 is defined as a direction to the right of the travel machine body 201.

As shown in FIGS. 8 and 9, the combine includes a travel machine body 201 that is provided with a pair of left and right crawler travel apparatuses 202. A driver section 203 is provided in a right side portion of a front portion of the travel machine body 201. A driver's seat 204 is provided in the driver section 203. The driver section 203 is covered by a cabin 205. An engine (not shown) is formed below the driver's seat 204. A threshing apparatus 206 and a grain tank 207 are provided in a rear portion of the travel machine body 201. The threshing apparatus 206 and the grain tank 207 are arranged in a width direction of the travel machine body 201 such that the grain tank 207 is located rearward of the driver section 203. A discharged straw shredding apparatus 208 is provided rearward of the threshing apparatus 206. A reaping conveyance apparatus 209 extends forward from a threshing apparatus 206 side portion of the front portion of the travel machine body 201. The reaping conveyance apparatus 209 includes a conveyance unit 210 that extends forward from the travel machine body 201 so as to be able to be operated to swing upward and downward, and a reaping unit 211 that is provided on the front side of the travel machine body 201 and whose rear portion thereof is coupled to a front end portion of the conveyance unit 210. The reaping unit 211 is operated so as to be in a lowered working state and a raised non-working state in response to the conveyance unit 210 being operated to swing due to the extension and contraction of a lifting/lowering cylinder 212.

In the combine, harvesting work is performed to harvest rice, wheat, soybeans, etc. by causing the travel machine body 201 to travel in a state where the reaping unit 211 is lowered to be in the lowered working state. In the reaping unit 211, ear tip-side portions of the planted stalks located forward of the travel machine 201 of the planted stalks in the cultivated field are shoveled rearward by a rotary reel 213, and root-side portions of the planted stalks are cut by the reaping apparatus 214, thus the planted stalks are reaped, and the entire reaped stalks from the roots to the ear tips are conveyed to the conveyance unit 210 by an auger 215. The reaped stalks conveyed to the conveyance unit 210 are conveyed rearward by the conveyance unit 210 and are supplied to a threshing unit 206A of the threshing apparatus 206. In the conveyance unit 210, the reaped stalks thus supplied are subjected to threshing processing, the grains that have been subjected to sort processing are conveyed by a winnowing apparatus 216 to the grain tank 207, and the grains are stored in the grain tank 207. The grains stored in the grain tank 207 can be taken out of the grain tank 207 using a threshed product discharge apparatus 217.

Although FIG. 8 only shows a schematic diagram, a stalk detection sensor S12 that detects the presence/absence of reaped stalks in the threshing apparatus 206 is provided. This stalk detection sensor S12 swings as a result of coming into contact with reaped stalks that enter the threshing unit 206A. The working state of the combine is detected based on the presence of reaped stalks, and the non-working state of the combine is detected based on the absence of reaped stalks.

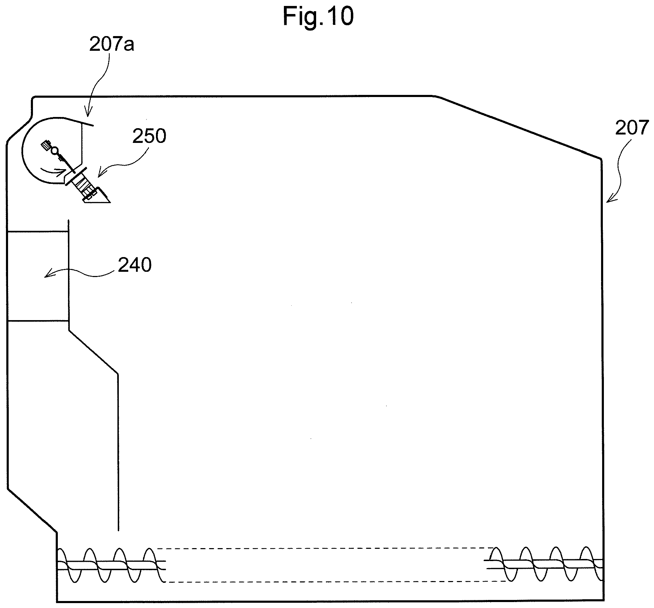

FIG. 10 shows the yield measuring unit 250 that measures the yield, which is the amount of grain input from the threshing apparatus 206 to the grain tank 207 through the winnowing apparatus 216, and a taste value measuring unit 240 that measures the quality (moisture, protein amount, etc.) of grains input to the grain tank 207.

The yield measuring unit 250 is built into a grain discharge apparatus 207a. The grain discharge apparatus 207a scatters and discharges the conveyed grains into the grain tank 207, using a rotating plate. The yield measuring unit 250 calculates the flow rate of grains based on the signal of a load cell that is distorted by the collision force of grains that are scattered and discharged each time the rotating plate rotates. The yield measuring unit 250 calculates the measured yield based on the flow rate of the grains in a predetermined cycle that is the rotation cycle of the rotating plate for the grains input to the grain tank 207.

The taste value measuring unit 240 temporarily stores some of the grains scattered and discharged by the grain discharge apparatus 207a, irradiates the stored grains with light, and measures the taste value (moisture and protein) of the grains by performing spectral analysis on the light returned through the grains. Such temporary storage and measurement of the taste value of grains are performed periodically.

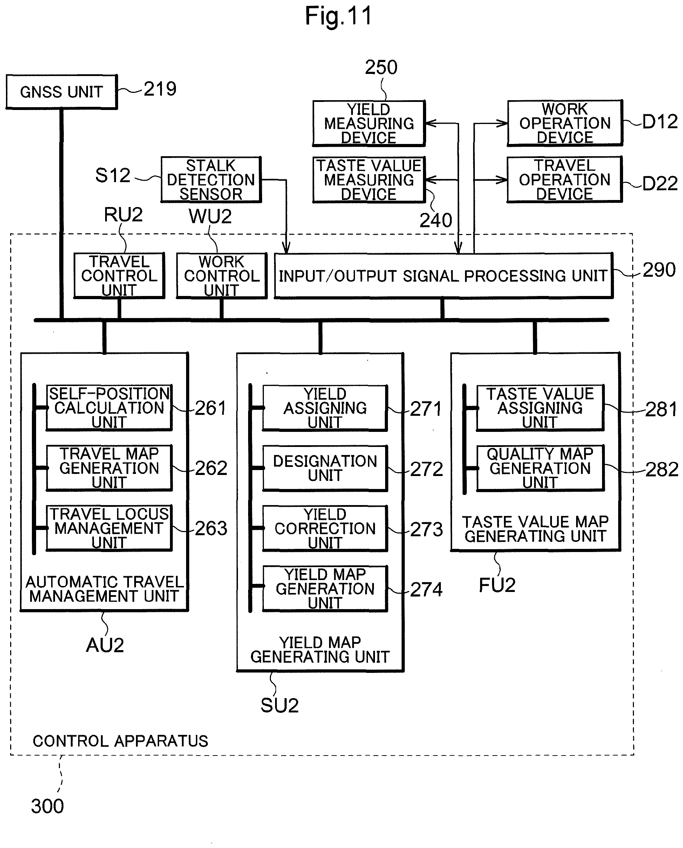

FIG. 11 shows a functional block diagram illustrating the control function for measuring the grain amount (yield) per unit plot (small plot) in the cultivated field to obtain the yield map (grain amount distribution map) of the cultivated field.

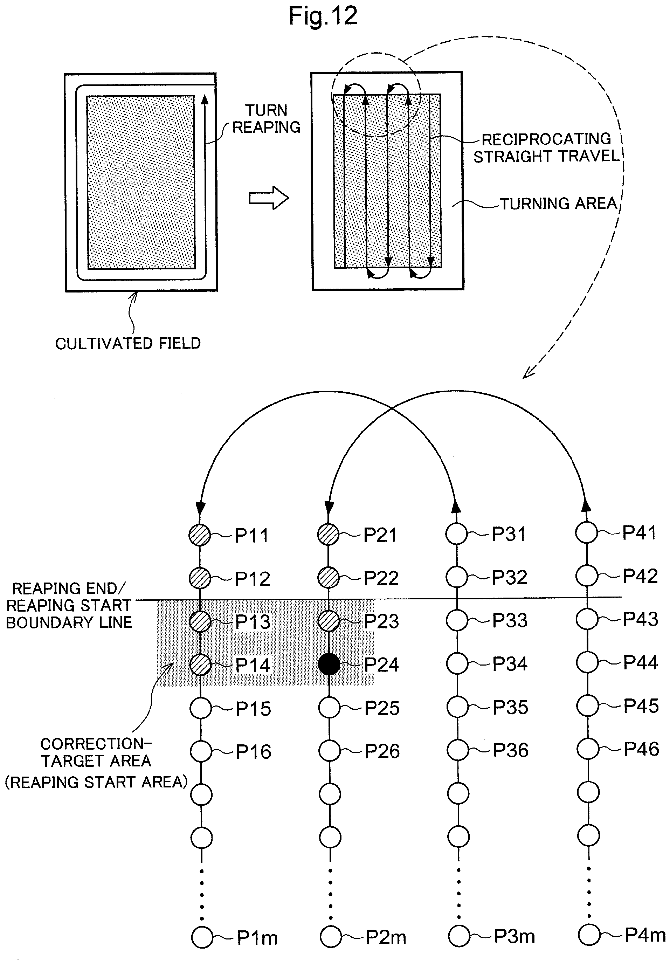

This combine can automatically travel along a preset travel route (travel map). For this reason, as shown in FIGS. 8 and 9, a GNSS unit 219 that has a satellite positioning function that is the function of receiving satellite radio waves and calculating position coordinates is provided on the upper surface of the top plate of the cabin 205. As shown in FIG. 11, a control apparatus 300 includes an automatic travel management unit AU2. The automatic travel management unit AU2 includes a self-position calculation unit 261, a travel map setting unit 262, a travel locus management unit 263, and so on. The self-position calculation unit 261 calculates the self-position in the cultivated field, more specifically, the reaping position (harvest position) of the planted stalks based on the position coordinates output from the GNSS unit 219. The travel map setting unit 262 sets a target travel route when performing automatic travel. The travel locus management unit 263 generates a travel locus of the travel machine body 201, and manages an unworked area, an existing worked area, and a turning area (an area used when shifting from a work route to the next work route, also called a headland; see FIG. 12) in the cultivated field. As described above, the turning area is a worked area in which reaping work has been performed. With this configuration, the self-position calculation unit 261 can manage a "reaping start" state, which is the travel state immediately after the reaping unit 211 enters the unreaped area (unworked area) from the turning area, and a "reaping end" state, which is the travel state immediately after the reaping unit 211 finishes reaping in the unreaped area and enters the turning area, and outputs a signal or a flag indicating the state.

The "start of reaping" and the "end of reaping" can also be determined from the detection result of the stalk detection sensor S12. For example, the stalk detection sensor S12 can detect the absence of roots and determine the "end of reaping" when the combine has travelled 1 to 2 m.

Furthermore, the control apparatus 300 includes a travel control unit RU2, a work control unit CU2, a yield map generating unit HU2, and a taste value map generation unit FU2. The travel control unit RU2 generates a control signal related to travel control and transmits the control signal to a travel operation device D22 via an input/output signal processing unit 290 to control the travel of the travel machine body 201. The work control unit CU2 generates a control signal related to work such as reaping control and threshing control and transmits the control signal to the work operation device D12 via the input/output signal processing unit 290 to control the operations of the reaping unit 211 and the threshing apparatus 206. The yield measuring unit 250 and the taste value measuring unit 240 described above also exchange signals and data with the control apparatus 300 via the input/output signal processing unit 290.

The yield map generating unit HU2 includes a yield assigning unit 271, a designation unit 272, a yield correction unit 273, and a yield map generation unit 274. The yield assigning unit 271 determines the position of the reaping unit 211 calculated and set by the self-position calculation unit 261 as a measurement point, and assigns the measured yield sent from the yield measurement unit 250 to the measurement point.

Note that the yield measuring unit 250 measures the amount of grain based on the maximum value of the load cell in the cycle in which the rotating plate makes one rotation. If the rotation cycle of the rotating plate is approximately a fraction of a second, the amount of grain is measured several times per second. Therefore, in this embodiment, the amount of grain per second obtained by accumulating the amounts of grain measured per second is transmitted to the yield map generating unit HU2 as the measured yield. Therefore, the measurement point to which the measured yield is assigned is also set based on the position of the reaping unit 211 calculated approximately every second.

At the start of reaping, almost no grains are retained in the route from the reaping unit 211 to the grain tank 207, and even if the delay time of the grains from the reaping unit 211 to the grain tank 207 is considered, it is highly likely that an error will occur in the measured yield assigned to the measurement point. For this reason, there is a need to correct the measured yield assigned to the measurement point set at the start of reaping. In this embodiment, the measured yield assigned to the measurement point set at the start of reaping is replaced with a new measured yield calculated based on the measured yields assigned to the surrounding measurement points.

The designation unit 272 determines a measurement point located in the reaping start area that is to be corrected, as a correction point, and designates a plurality of measurement points located around the correction point as designated measurement points. The yield correction unit 273 corrects (rewrites) the measured yield assigned to the correction point to be corrected, based on the measured yields assigned to the designated measurement points.

Hereinafter, an example of the correction calculation of the measured yield assigned to the correction point will be described with reference to FIG. 12. In FIG. 12, the measurement points are indicated with reference numerals P11 to P4m. The correction point is the measurement point P24 located in the reaping start area, which is the correction target area, and is indicated by a circle filled with black.

The measurement points that are to be designated by the designation unit 272 are measurement points within a predetermined distance from the correction point P24. As for the measurement points within the predetermined distance from the correction point P24, the measurement points within the circle centered around the correction point P24 and having a radius of the predetermined distance are the designated measurement points. However, here, for simplification, the measurement points indicated by P11 to P16, P21 to P26, and P31 to P36 are indicated as designated measurement points. Furthermore, in this correction processing, an invalid measurement point is selected from among the measurement points that are to be the designated measurement points. The invalid measurement points are the measurement points located in the reaping end areas (P31 and P32 in FIG. 12) and the measurement points to which the measured yield corrected by the yield correction unit 273 is assigned (P11 to P14 and P21 to P23 in FIG. 12), and these points are excluded from the designated measurement points. As a result, the designated measurement points to ultimately be used to correct the correction point are the measurement points indicated by P11 to P16, P25, P26, and P31 to P36.

A weighted average is used in the correction algorithm in this embodiment, in which the measured yield newly assigned to the correction point is obtained from the measured yields assigned to the designated measurement points. Here, the measured yields assigned to the measurement points indicated by P11 to P16, P25, P26, and P31 to P36 are Q11 to Q16, Q25, Q26, and Q31 to Q36, respectively, and the weights w given to the measurement points are values of a function in which the distance from the correction point is a variable, and are w11 to w16, w25, w26, and w31 to w36, respectively.

The measured yield newly assigned to the correction point is

$$(Q11 \cdot w11 + ... + Q31 \cdot w31) / (w11 + ... + w31).$$

In this way, all the measured yields initially assigned to the measurement points located in the reaping start area are corrected (rewritten) by the yield correction unit 273.

The weight in the weighted average can be determined using various methods as follows.

(a) A weight "w24 = 1.0" is given to the correction point P24, and the weight "w36 = 0.0" is given to the measurement point farthest from the correction point (for example, P36) of the designated measurement points. The weights of the remaining designated measurement points are values obtained by subtracting the ratio p between the distance from the correction point P24 to the measurement points and the distance from the correction point P24 to the measurement point P36, from "1.0" (1.0> 1.0 - p > 0.0).

(b) A weight "w24 = 1.0" is given to the correction point P24, and the weight "w36 = 0.5" is given to the measurement point farthest from the correction point (for example, P36) of the designated measurement points. The weights of the remaining designated measurement points are obtained through proportional distribution, using the values obtained by subtracting the ratio $\rho$ between the distance from the correction point P24 to the measurement points and the distance from the correction point P24 to the measurement point P36, from "1.0" (1.0 - p). That is to say, the weights of the remaining measurement points are "0.5 + 0.5 × (1.0 - p) = 0.5 × (2.0 - p).

(c) As a more general method for obtaining the weight, it is possible to use a function G for deriving the weight of each of the remaining measurement points, in which the above ratio (1.0 - p) is used as a variable. This function may be a linear function, but it may also be a non-linear function such as a quadratic function or a step function.

Furthermore, the above-described correction algorithm for calculating the measured yield assigned to the correction point to be corrected is an example, and other correction algorithms are listed below. However, the present invention is not limited thereto. For example,

(1) First, the designated measurement points to be determined may be determined as measurement points in the entire cultivated field, and a predetermined number of measurement points with a short distance from the correction points may be selected, and furthermore, the determination of invalid measurement points may be performed by narrowing down the number of points, and thereafter a number of designated measurement points corresponding to the number invalid measurement points may be added.

(2) When the travel locus management unit 263 has detected the boundary line between the turning area and the internal area in the turning area, i.e., the reaping end boundary line or the reaping start boundary line, only the measurement points located in the internal area of the turning area may be the points to be determined as the designated measurement points, from the beginning.

(3) When the target area for the designated measurement points is small (when the distance from the correction point for designating the designated measurement points is set to be small), the arithmetic mean may be used instead of the weighted average.

The yield map generation unit 274 calculates the yield for each small plot in the cultivated field based on the measured yields assigned to all of the measurement points including the measurement points corrected by the yield correction unit 273, and generates the yield distribution map of the cultivated field.

The taste value map generation unit FU2 includes a taste value assigning unit 281 and a quality map generation unit 282. The taste value assigning unit 281 assigns taste values to the small plots in the cultivated field, using the taste values sent from the taste value measuring unit 240, the self-position (the position of the reaping unit 211) sent from the self-position calculation unit 261, and the delay time for the grains threshed from the reaped stalks to reach the taste value measuring unit 240. The quality map generation unit 282 generates a taste value distribution map of the cultivated field, using the taste values assigned to the small plots in the cultivated field. The above-described correction method regarding the assignment of the yields to the small plots may also be adopted in the assignment of the taste values to the small plots.

If the yield distribution map and the taste value distribution map are to be created after the harvest work is complete, the yield map generation unit 274 and the quality map generation unit 282 do not necessarily have to be provided in the combine. The yield map generation unit 274 and the quality map generation unit 282 may be provided in a tablet computer or smartphone owned by a farm worker, or a computer of a cloud service.

In addition, a yield correction method for correcting a yield of the combine includes: a yield assigning step of assigning, to a measurement point that is calculated with use of satellite positioning, the measured yield at the measurement point; a designation step of designating, as a correction point, the measurement point that is located in a reaping start area and designating, as designated measurement points, a plurality of measurement points that are located around the correction point; and a yield correction step of, based on the measured yields assigned to the designated measurement points, correcting the measured yield assigned to the correction point.

A yield correction program according to the present embodiment causes a computer to carry out the yield correction method according to the present embodiment. A computer-readable recording medium according to the present embodiment is a computer-readable recording medium on which the program that causes a computer to carry out the yield correction method according to the present embodiment is recorded.

Other Embodiments

(1) In the above-described embodiments, the yield measuring unit 250 is configured to calculate the flow rate of grains based on the signal of the load cell that is distorted by the collision force of grains that are scattered and discharged each time the rotating plate rotates. Instead, it is possible to install a temporary storage chamber that temporarily stores grains that have been scattered and discharged, and employ a yield measuring unit 250 that determines a grain amount per unit time or a grain amount per unit mileage based on the time taken for the grain amount to reach a predetermined volume. Also, a granular material flow measuring device may be installed on a grain transport path extending from the threshing apparatus 206 to the grain tank 207 to measure the grain amount per unit time or the grain amount per unit mileage.

(2) In the above-described embodiment, a normal type combine is used as a combine. However, a head-feeding type combine may be used instead. In a head-feeding combine, a swing lever type sensor that is provided in the reaping unit 211 and detects the entry of stalks is used as the stalk detection sensor S12.

(3) The present invention is applicable to a combine that can calculate the yield per small plot in a cultivated field.

Description of Reference Signs

First Embodiment

6:      Threshing Apparatus
6A:     Threshing Cylinder Unit
6B:     Sort unit
7:      Grain Tank
11:     Reaping Unit
22:     Threshing Cylinder
25a:    Dust Feed Valve
35:     Chaff Sheave
38:     Fanning Mill
40:     Grain Quality Measuring Device
50:     Yield Measuring Device
61:     Self-position Calculation Unit
71:     Opening Degree Adjustment Unit
72:     Wind Power Changing Unit
73:     Mode Setting Unit
74:     Yield Accuracy Maintenance Unit
81:     Unit Yield Calculation Unit
83:     Plot Assigning Unit
84:     Yield Map Generation Unit

85: Quality Map Generation Unit
100: Control Apparatus
391: First Product Collection Unit
392: Second Product Collection Unit
M1: Chaff Motor
M2: Fanning Mill Motor
S1: Stalk Detection Sensor
S2: Processing Amount Detection Sensor
SU: Threshing Control Unit

Second Embodiment

206: Threshing Apparatus
206A: Threshing Unit
207: Grain Tank
211: Reaping Unit
219: GNSS Unit
250: Yield Measuring Unit
261: Self-position Calculation Unit
262: Travel Map Setting Unit
263: Travel Locus Management Unit
271: Yield Assigning Unit
272: Designation Unit
273: Yield Correction Unit
274: Yield Map Generation Unit
281: Taste Value Assigning Unit
282: Quality Map Generation Unit
300: Control Apparatus
FU2: Taste Value Map Generation Unit
HU2: Yield Map Generation Unit

## Claims

1. A combine comprising:

   a reaping unit that reaps planted stalks;
   a threshing apparatus including:

      a threshing cylinder unit that processes reaped stalks; and
      a sort unit that swings to sort grains fallen from the threshing cylinder unit;

   a grain tank that stores grains sorted by the sort unit;
   a yield measuring device that measures an amount of grain put in the grain tank;
   a unit yield calculation unit that calculates a unit yield per unit plot in a cultivated field based on the amount of grain;
   an opening degree adjustment unit that adjusts an opening degree of a chaff sheave of the sort unit in accordance with a threshing state of the threshing apparatus;
   a mode setting unit that sets a yield accuracy priority mode in which priority is given to accuracy of the unit yield calculation performed by the unit yield calculation unit; and
   a yield accuracy maintenance unit that in response to the mode setting unit setting the yield accuracy priority mode, forcibly fixes the opening degree of the chaff sheave at a specific opening degree in preference to the opening degree as adjusted by the opening degree adjustment unit.

2. The combine according to claim 1,
   wherein the specific opening degree is selectable.

3. The combine according to claim 1 or 2, further comprising

   a wind power changing unit that changes a wind power of a fanning mill that supplies sorting wind to the sort unit, wherein in response to the mode setting unit setting the yield accuracy priority mode, the yield accuracy maintenance unit forcibly fixes the wind power of the fanning mill at a specific wind power in preference to the wind power as adjusted by the wind power adjustment unit.

4. The combine according to claim 3,
   wherein the specific wind power is selectable.

5. The combine according to any one of claims 1 to 4,
   wherein the mode setting unit has a function of determining whether the reaping unit is in a reap work state or a non-reap work state, and sets the yield accuracy priority mode when the reaping unit is in the reap work state, and cancels the yield accuracy priority mode when the reaping unit is in the non-reap work state.

6. The combine according to claim 5, further comprising

   a stalk detection sensor that detects presence or absence of the reaped stalks in the reaping unit or the threshing apparatus,
   wherein in response to the stalk detection sensor detecting the absence, the mode setting unit determines that the reaping unit is in the non-reap work state.

7. The combine according to claim 5, further comprising

   a stalk detection sensor that detects presence or absence of the reaped stalks in the reaping unit or the threshing apparatus,
   wherein in response to the stalk detection sensor detecting the absence, the mode setting unit determines upon a predetermined period of time elapsing that the reaping unit is in the non-reap work state.

8. The combine according to claim 5, further comprising

   a stalk detection sensor that detects presence or absence of the reaped stalks in the reaping unit or the threshing apparatus,
   wherein in response to the stalk detection sensor detecting the absence, the mode setting unit determines upon a certain distance being travelled that the reaping unit is in the non-reap work state.

9. The combine according to claim 5, further comprising

   a self-position calculation unit that detects entrance of the reaping unit from a work area into a non-work area in a reap work passage,
   wherein the mode setting unit determines upon the self-position calculation unit detecting the entrance of the reaping unit into the non-work area that the reaping unit is in the non-reap work state.

10. A yield calculation method for calculating a yield of a combine,
    the combine including:

    a reaping unit that reaps planted stalks;
    a threshing apparatus including:

       a threshing cylinder unit that processes reaped stalks; and
       a sort unit that swings to sort grains fallen from the threshing cylinder unit;

    a grain tank that stores grains sorted by the sort unit; and
    a yield measuring device that measures an amount of grain put in the grain tank,
    the yield calculation method comprising:

       calculating a unit yield per unit plot in a cultivated field based on the amount of grain;
       adjusting an opening degree of a chaff sheave of the sort unit in accordance with a threshing state of the threshing apparatus;

setting a yield accuracy priority mode in which priority is given to accuracy of the unit yield calculation performed in the calculating; and

in response to the yield accuracy priority mode being set in the mode setting step, forcibly fixing the opening degree of the chaff sheave at a specific opening degree in preference to the opening degree as adjusted in the opening degree adjustment step.

**11.** A yield calculation program that causes a computer to carry out the yield calculation method according to claim 10.

**12.** A computer-readable recording medium on which the yield calculation program according to claim 11 is recorded.

**13.** A combine comprising:

a reaping unit that reaps planted stalks from a cultivated field;

a threshing unit that threshes stalks reaped by the reaping unit;

a grain tank that stores grains threshed by the threshing unit;

a yield measuring unit that measures, as a measured yield, an amount of grain sent from the threshing unit to the grain tank;

a yield assigning unit that assigns, to a measurement point that is calculated with use of satellite positioning, the measured yield at the measurement point;

a designation unit that designates, as a correction point, the measurement point that is located in a reaping start area and designates, as designated measurement points, a plurality of measurement points that are located around the correction point; and

a yield correction unit that, based on the measured yields assigned to the designated measurement points, corrects the measured yield assigned to the correction point.

**14.** The combine according to claim 13,

wherein the designation unit selects, as the designated measurement points, measurement points that are located within a predetermined distance from the correction point.

**15.** The combine according to claim 13,

wherein the designation unit selects, as the designated measurement points, a predetermined number of measurement points selected in ascending order of the distance from the correction point.

**16.** The combine according to any one of claims 13 to 15,

wherein the designation unit determines, as an invalid measurement point, a measurement point that is located in a reaping end area, and excludes the invalid measurement point from the designated measurement points.

**17.** The combine according to any one of claims 13 to 16,

wherein the designation unit determines, as an invalid measurement point, a measurement point to which the measured yield corrected by the yield correction unit is assigned, and excludes the invalid measurement point from the designated measurement points.

**18.** The combine according to any one of claims 13 to 17,

wherein the yield correction unit calculates, based on a weighted average of the measured yields assigned to the designated measurement points, the measured yield to be assigned to the correction point, the weighted average being such that a weight in the weighted average increases as the distance from the correction point increases.

**19.** The combine according to any one of claims 13 to 18,

wherein a small plot that is divided from the cultivated field includes at least one measurement point.

**20.** The combine according to any one of claims 13 to 19, further comprising

a yield map generation unit that generates a yield distribution map of the cultivated field based on the measured yields assigned to the measurement points.

**21.** A yield correction method for correcting a yield of a combine,

the combine including:

a reaping unit that reaps planted stalks from a cultivated field;
a threshing unit that threshes stalks reaped by the reaping unit;
a grain tank that stores grains threshed by the threshing unit; and
a yield measuring unit that measures, as a measured yield, an amount of grain sent from the threshing unit to the grain tank,
the yield correction method comprising:

a yield assigning step of assigning, to a measurement point that is calculated with use of satellite positioning, the measured yield at the measurement point;
a designation step of designating, as a correction point, the measurement point that is located in a reaping start area, and designating, as designated measurement points, a plurality of measurement points that are located around the correction point; and
a yield correction step of, based on the measured yields assigned to the designated measurement points, correcting the measured yield assigned to the correction point.

22. A yield correction program that causes a computer to carry out the yield correction method according to claim 21.

23. A computer-readable recording medium on which the yield correction program according to claim 22 is recorded.

# Fig.1

Fig.2

EP 3 991 538 A1

Fig.3

## Fig.4

# Fig.5

## Fig.6

## Fig.7

EP 3 991 538 A1

# Fig.8

Fig.9

EP 3 991 538 A1

# Fig.10

# Fig.11

250

GNSS UNIT ~219

YIELD MEASURING DEVICE

WORK OPERATION DEVICE ~D12

S12 — STALK DETECTION SENSOR

TASTE VALUE MEASURING DEVICE

TRAVEL OPERATION DEVICE ~D22

RU2    WU2    240

TRAVEL CONTROL UNIT

WORK CONTROL UNIT

INPUT/OUTPUT SIGNAL PROCESSING UNIT ~290

SELF-POSITION CALCULATION UNIT ~261

YIELD ASSIGNING UNIT ~271

TASTE VALUE ASSIGNING UNIT ~281

TRAVEL MAP GENERATION UNIT ~262

DESIGNATION UNIT ~272

QUALITY MAP GENERATION UNIT ~282

TRAVEL LOCUS MANAGEMENT UNIT ~263

YIELD CORRECTION UNIT ~273

TASTE VALUE MAP GENERATING UNIT

AUTOMATIC TRAVEL MANAGEMENT UNIT

YIELD MAP GENERATION UNIT ~274

FU2

AU2

YIELD MAP GENERATING UNIT

SU2

CONTROL APPARATUS

300

## Fig.12

## INTERNATIONAL SEARCH REPORT

| | International application No. |
|---|---|
| | PCT/JP2020/019934 |

### A. CLASSIFICATION OF SUBJECT MATTER

A01D 41/127(2006.01)i
FI: A01D41/127 140

According to International Patent Classification (IPC) or to both national classification and IPC

### B. FIELDS SEARCHED

Minimum documentation searched (classification system followed by classification symbols)
A01D41/127

Documentation searched other than minimum documentation to the extent that such documents are included in the fields searched
| | |
|---|---|
| Published examined utility model applications of Japan | 1922–1996 |
| Published unexamined utility model applications of Japan | 1971–2020 |
| Registered utility model specifications of Japan | 1996–2020 |
| Published registered utility model applications of Japan | 1994–2020 |

Electronic data base consulted during the international search (name of data base and, where practicable, search terms used)

### C. DOCUMENTS CONSIDERED TO BE RELEVANT

| Category* | Citation of document, with indication, where appropriate, of the relevant passages | Relevant to claim No. |
|---|---|---|
| X | JP 2017-60443 A (KUBOTA CORP.) 30.03.2017 (2017-03-30) paragraphs [0019]-[0021], [0024]-[0025], [0032]-[0034], [0038], [0050], fig. 1, 8 | 13-17, 19-23 |
| A | JP 2019-4797 A (KUBOTA CORP.) 17.01.2019 (2019-01-17) entire text, all drawings | 1-12 |
| A | JP 2017-55735 A (KUBOTA CORP.) 23.03.2017 (2017-03-23) entire text, all drawings | 13-23 |
| A | JP 2005-278539 A (MITSUBISHI AGRICULT MACH CO., LTD.) 13.10.2005 (2005-10-13) entire text, all drawings | 13-23 |
| A | WO 2018/092719 A1 (YANMAR CO., LTD.) 24.05.2018 (2018-05-24) entire text, all drawings | 13-23 |
| A | WO 2018/092718 A1 (YANMAR CO., LTD.) 24.05.2018 (2018-05-24) entire text, all drawings | 13-23 |

☐ Further documents are listed in the continuation of Box C. ☒ See patent family annex.

| | | | |
|---|---|---|---|
| * | Special categories of cited documents: | "T" | later document published after the international filing date or priority date and not in conflict with the application but cited to understand the principle or theory underlying the invention |
| "A" | document defining the general state of the art which is not considered to be of particular relevance | | |
| "E" | earlier application or patent but published on or after the international filing date | "X" | document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
|---|---|
| 04 August 2020 (04.08.2020) | 18 August 2020 (18.08.2020) |

| Name and mailing address of the ISA/ | Authorized officer |
|---|---|
| Japan Patent Office | |
| 3-4-3, Kasumigaseki, Chiyoda-ku, | |
| Tokyo 100-8915, Japan | Telephone No. |

Form PCT/ISA/210 (second sheet) (January 2015)

INTERNATIONAL SEARCH REPORT

Information on patent family members

International application No.

PCT/JP2020/019934

| Patent Documents referred in the Report | Publication Date | Patent Family | Publication Date |
|---|---|---|---|
| JP 2017-60443 A | 30 Mar. 2017 | US 2018/0132419 A1 paragraphs [0101]-[0103], [0107]-[0108], [0116]-[0118], [0120], [0177], fig. 10, 11 WO 2017/038207 A1 EP 3351087 A1 CN 107613754 A KR 10-2018-0044228 A | |
| JP 2019-4797 A | 17 Jan. 2019 | WO 2019/004130 A1 entire text, all drawings CN 110602944 A KR 10-2020-0014734 A | |
| JP 2017-55735 A | 23 Mar. 2017 | US 2018/0132419 A1 entire text, all drawings WO 2017/038207 A1 EP 3351087 A1 CN 107613754 A KR 10-2018-0044228 A | |
| JP 2005-278539 A | 13 Oct. 2005 | (Family: none) | |
| WO 2018/092719 A1 | 24 May 2018 | JP 2018-78820 A KR 10-2019-0042678 A CN 109922655 A | |
| WO 2018/092718 A1 | 24 May 2018 | JP 2018-78819 A KR 10-2019-0042677 A CN 109963457 A | |

Form PCT/ISA/210 (patent family annex) (January 2015)

**EP 3 991 538 A1**

**REFERENCES CITED IN THE DESCRIPTION**

**Patent documents cited in the description**

- WO 2016147521 A
- JP 2003284424 A
- JP 2005278539 A
- JP 2017060443 A